# EUROPEAN PATENT APPLICATION

(11) **EP 2 436 549 A1**
(43) Date of publication of application: **04.04.2012**
(21) Application number: 10185474.3
(22) Date of filing: 01.10.2010
(51) Int. Cl.: B60K 28/02, B60R 21/015

(54) **Improved control of vehicle and vehicle safety systems**

(71) Applicant: Volvo Car Corporation, 405 31 Göteborg (SE)
(72) Inventor: Svensson, Birger, 42932, Kullavik (SE); Aldeborg, Gert, 45197, Uddevalla (SE)

(57) **Abstract**

The present invention relates to a method and an apparatus for improving the operation of a motor vehicle for safety purposes and/or of safety systems in the motor vehicle such that optimum cooperation of said systems is achieved and such that said systems are individually adapted to at least the driver of the vehicle, said method comprises sensing at least one physical characteristic and/or the position of at least the driver (5) of the motor vehicle (2) in a compartment (1) of the vehicle and providing a signal indicative thereof, determining the sex and/or age of said driver (5) and providing a signal indicative thereof, and controlling, in response to said signals, the power of the engine (15) of the vehicle (2) and/or the safety systems (16) in the vehicle such that said engine power and/or said safety systems are adapted to said driver (5). The apparatus (10) used at this method comprises at least a sensor means (11), a determining means (13) and a control means

## Description

### TECHNICAL FIELD

The present invention relates to a method and an apparatus for improving the operation of a motor vehicle for safety purposes and/or of safety systems in the motor vehicle.

### BACKGROUND OF THE INVENTION

Today, occupant weight sensors, belt tension sensors and seat track sensors are used for determining the position and type of load present in a vehicle compartment. In e.g. US 5 670 853, an apparatus controls the position of an occupant in a vehicle passenger compartment by sensing physical characteristics of the occupant such as weight, height, girth and leg length. The apparatus moves the occupant to a position based on these physical characteristics and adjusts the performance of an occupant restraint system in response to the selected occupant position for improving the operation of said occupant restraint system.

### SUMMARY OF THE INVENTION

The object of the present invention is to further coordinate and improve the operation of the vehicle and of the vehicle safety systems such that optimum cooperation of said systems is achieved and such that said systems are individually adapted to each driver and passenger and/or object present in the vehicle compartment to provide improved safety.

This is achieved according to the invention by presenting a method wherein at least one physical characteristic and/or the position of at least the driver of the motor vehicle in a compartment of the vehicle is sensed and a signal indicative thereof is provided, wherein the sex and/or age of said driver is determined and a signal indicative thereof is provided, and wherein, in response to said signals, the power of the engine of the vehicle and/or the safety systems in the vehicle is/are controlled such that said engine power and/or said safety systems are adapted to said driver.

Furthermore, the method may also comprise the measures of sensing at least one physical characteristic and/or the position of one or more passengers or objects in the compartment of the vehicle and providing signals indicative thereof, determining the sex and/or age of said one or more passengers and/or the type of object and providing signals indicative thereof, and controlling, in response to said signals, the safety systems in the vehicle such that said safety systems are adapted to said one or more passengers and/or objects.

The object mentioned above is also achieved according to the invention by providing an apparatus as defined above, said apparatus comprising, primarily, a sensor means which is configured for sensing at least one physical characteristic and/or the position of at least the driver of the motor vehicle in a compartment of the vehicle and providing a signal indicative thereof, a determining means which is configured for determining the sex and/or age of said driver and providing a signal indicative thereof, and a control means which is operatively coupled to said sensor means and said determining means for controlling, in response to the signals from said sensor means and said determining means, the power of the engine of the vehicle and/or the safety systems in the vehicle such that said engine power and/or said safety systems are adapted to said driver.

Secondly, the sensor means is also configured for sensing at least one physical characteristic and/or the position of one or more passengers or objects in the compartment of the vehicle and providing signals indicative thereof, the determining means is also configured for determining the sex and/or age of said one or more passengers and/or the type of object and providing signals indicative thereof, and the control means is operatively coupled to said sensor means and said determining means for controlling, in response to the signals from said sensor means and said determining means, the safety systems in the vehicle such that said safety systems are adapted to said one or more passengers and/or objects.

Thus, instead of using the physical characteristics of the persons in the compartment of the vehicle for positioning said persons in order to improve the safety of certain restraint systems, the present invention renders it possible to use said physical characteristics as well as the position, sex and age of the persons and/or the type of objects in the compartment of the vehicle not to reposition said persons and/or objects, but primarily to optimize the driving power of the vehicle and/or all safety systems in the vehicle, passive as well as active, in accordance with the obtained information.

### BRIEF DESCRIPTION OF THE DRAWINGS

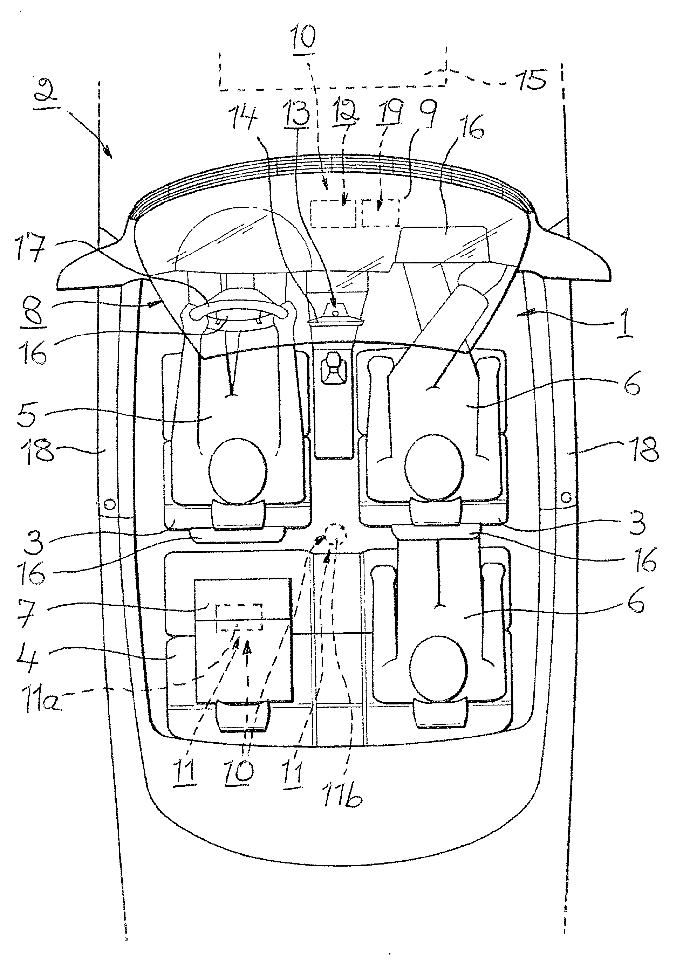

The present invention will be further described below by way of example only and with reference to the accompanying drawing, in which the only figure is a schematic view from above of a passenger compartment of a motor vehicle with a simple embodiment of an apparatus according to the invention.

### DETAILED DESCRIPTION OF PREFERRED EMBODIMENTS

As is apparent from the above, the apparatus according to the present invention is an apparatus for improving the operation of a motor vehicle for safety purposes and/or of safety systems in the motor vehicle. The apparatus is, as previously stated, capable of coordinating and improving the operation of the vehicle and of the vehicle safety systems such that optimum cooperation of said systems is achieved and such that said systems are individually adapted to each driver and passenger and/or object present in the vehicle compartment to provide improved safety.

The drawing shows a passenger compartment 1 of a motor vehicle 2 from above. In the compartment 1 there are provided two vehicle seats 3 in the front region and one rear bench seat 4. The front seats 3 and the rear bench seat 4 are occupied by the driver 5, two passengers 6 and an object 7. A windshield 8 is arranged above a dashboard 9. As illustrated in the drawing, the apparatus 10 according to the invention comprises a sensor means 11 which is configured for sensing at least one physical characteristic and/or the position of at least the driver 5 of the motor vehicle 2 in the compartment 1 thereof and providing a signal indicative thereof. The sensor means 11 is also configured for sensing at least one physical characteristic and/or the position of one or more of the passengers 6 or the object 7, e.g a child seat or parcel, in the compartment 1 of the vehicle 2 and providing signals indicative thereof. The sensor means 11 may in turn comprise one or more sensors of various type, based on what physical characteristic the sensor shall sense. Thus, the sensor means 11 may be configured for sensing and providing a signal indicative of a physical characteristic such as the weight of the driver 5 and/or of one or more passengers 6 or the object 7 in the compartment 1 of the vehicle 2. A sensor 11 a for this purpose is shown with broken lines in the drawing. This sensor 11 a may be a so called occupant weight sensor and may be situated in one or both front seats 3 and, as illustrated, in the rear bench seat 4 in the compartment 1 of the vehicle 2. The sensor means 11 may also be configured for sensing and providing a signal indicative of e.g. the height and/or the girth of the driver 5 and/or of one or more of the passengers 6 or the object 7 in the compartment 1 of the vehicle 2. Accordingly, the sensor means 11 may also comprise e.g. one or more height sensors 11 b (one height sensor is shown with broken lines in the drawing) mounted e.g. in the roof of the vehicle compartment 1 and belt tension sensors (not shown) for sensing the girth of the driver 5 and/or of one or more possible passengers 6 and/or objects 7. For sensing and providing a signal indicative of the position of the driver 5 and/or of one or more passengers 6 or the object 7 in the compartment 1 of the vehicle 2, the sensor means 11 may further comprise e.g. distance sensors (not shown) of a suitable type. Preferably, the sensor means 11 provides one or more signals which are indicative of all these physical characteristics as well as of the position of the driver 5 and/or of one or more of the passengers 6 and/or objects 7.

The sensor means 11 may operate with e.g. ultrasonic, infrared or electromagnetic radiation and may e.g. comprise an interior alarm for the vehicle. The sensor means 11 may also comprise some kind of neural network which is capable of distinguishing between adults, children, children in seats, plants, groceries and the like.

The signal or signals from the sensor means 11 is/are transferred to a control means 12 which will be further described below. This transfer may occur through a line or through a wireless connection or in any other suitable manner.

In the drawing, it is further illustrated that the apparatus 1 also comprises a determining means 13 which is configured for determining the sex and/or age of the driver 5 in the compartment 1 of the vehicle 2 and providing a signal indicative thereof. The image means 13 is also configured for visually determining the sex and/or age of one or more passengers 6 and/or the type of object 7 in the compartment 1 of the vehicle 2 and providing signals indicative thereof.

The determining means 13 may, as the sensor means 11, be configured in any suitable manner based on the requested information. Accordingly, the determining means may comprise an image means 13 which in turn may comprise a camera, e.g. a camera for monitoring eye movements, or any other image reproduction unit which is capable of providing the control means 12 with adequate information. It will be apparent that the image means 13 is also capable of visually distinguishing between adults, children, children in seats, plants, groceries, parcels and the like. In the illustrated embodiment, the image means 13 is a camera which is located behind the interior mirror 14 on the windshield 8. The image means 13 however, may have any other suitable location in the compartment 1 of the vehicle 2.

Alternatively, the determining means 13 may comprise e.g. a scanner on which the driver and possible passengers must place their driving licenses or other identity cards for scanning and thereby determining their sex and/or age, or comprise e.g. an arrangement into which the civic registration number of the driver and possible passengers must be fed.

The signal or signals from the determining means 13 is/are transferred to the control means 12. This transfer may occur in the same manner as by the sensor means 11, e.g. through a line or through a wireless connection or in any other suitable manner.

The control means 12 is, as indicated, operatively coupled to the sensor means 11 and the determining means 13 for controlling, in response to the signals from the sensor means and the determining means, the power of the engine 15 of the vehicle 2 and/or the safety systems in the vehicle such that the engine power and/or the safety systems are adapted to the driver 5. The control means 12 is operatively coupled to the sensor means 11 and the determining means 13 for controlling, in response to the signals from the sensor means and the determining means, the safety systems in the vehicle such that the safety systems are also adapted to one or more passengers 6 and/or objects 7. The control means 12 in the illustrated embodiment is located under the dashboard 9 in the compartment 1 of the vehicle 2, but may of course have any other suitable location on the vehicle. The control means 12 as well as the engine 15 of the vehicle 2 are shown with broken lines in the drawing.

A control signal or signals from the control means 12 may be transferred to the engine 15 of the vehicle 2 in the same manner as the signals from the sensor means 11 and determining means 13 are transferred to the control means, e.g. through a line or through a wireless connection or in any other suitable manner. Accordingly, the control means 12 may adjust the power of the engine 15 in accordance with e.g. the age of the driver 5 such that e.g. the higher the age the lower is the power of the engine due to the longer reaction time for older persons. Contrary thereto, the control means 12 may also adjust the power of the engine 15 such that the power of the engine is lowered when an inexperienced young person is driving.

Similarly, a control signal or signals from the control means 12 may be transferred to the safety systems of the vehicle 2 in the same way as the control signal or signals from the control means is/are transferred to the engine 15 of the vehicle, e.g. through a line or through a wireless connection or in any other suitable manner. Consequently, the control means 12 may adjust the safety systems, e.g. restraint systems such as seat belts and belt tensioners (not shown), in accordance with e.g. the size and weight of the driver 5 and any passenger 6 or object 7 on the front seats 3 and rear bench seat 4. The control means 12 may also adjust safety systems in the form of e.g. airbags 16 arranged in the steering wheel 17, in the dashboard 9 and at the rear of the front vehicle seats 3. In such case, the adjustment is made e.g. in accordance with the size and weight of the driver and possible passengers 6 and in accordance with if e.g. a child, a child in a child seat or an adult is situated in a passenger seat. The control means 12 may also be configured for controlling the safety systems such that e.g. side airbags (not shown) of the systems are adapted to any passenger who may be sleeping and who occupies a position e.g. close to a vehicle door 18.

The apparatus 10 according to the invention may optionally also comprise a memory means 19. This memory means 19 is configured for storing information therein relating to at least one physical characteristic and/or the position and/or the sex and/or age of presumptive drivers 5 and passengers 6, and is operatively coupled to the sensor means 11 and the determining means 13 for comparing the stored information with the signals provided by the sensor means and the determining means and providing, in response to the comparison, a signal to the control means 12 for controlling the power of the engine 15 of the vehicle 2 and/or the safety systems in the vehicle. The memory means 19 is configured to store said information by storing the signals provided by the sensor means and the determining means. With a memory means 19, it becomes possible to adjust the power of the engine 15 of the vehicle 2 and/or the safety systems of the vehicle 2 in a very short time. A further development of the memory means 19 will render it possible to perform the above-mentioned adjustments simply by e.g. feeding the memory means with a code identifying the driver and possible passengers, such that relevant information for controlling the engine 15 of the vehicle 2 and/or the safety systems of the vehicle is retrieved. The transfer of signals from the sensor means 11 and the determining means 13 to the memory means 19 may occur through a line or through a wireless connection or in any other suitable manner. The transfer of signals from the memory means 19 to the control means 12 may also occur through a line or through a wireless connection or in any other suitable manner. In the illustrated embodiment, the memory means (shown with broken lines in the drawing) is located beside the control means 12 under the dashboard 9.

It will be evident to a skilled person that the apparatus according to the present invention may be modified within the scope of the subsequent claims without departing from the idea and purpose of the invention. Thus, the apparatus described above may comprise a sensor means with, for the intended purpose, any desired number of sensors of any desired type and function for providing adequate signals to the control means. The apparatus may also comprise a determining means with, for the intended purpose, any desired number of image reproduction units of any desired type and function for providing adequate signals to the control means or, as proposed above, simply comprise a scanner or an arrangement for feeding the personal code numbers into the apparatus. The apparatus may also comprise a control means which is configured for optionally controlling one or more or all safety systems in the vehicle, electronic safety systems as well as mechanical safety systems, passive safety systems as well as active safety systems, and/or the power of the engine of the vehicle. The power control of the engine of the vehicle may be performed electronically as well as mechanically. Finally, the optional memory means may also be configured in any desired manner for performing its intended functions in the most appropriate way.

## Claims

1. Method for improving the operation of a driver-operated motor vehicle for safety purposes and/or of safety systems in the motor vehicle, **characterized by** sensing at least one physical characteristic and/or the position of at least the driver (5) of the motor vehicle (2) in a compartment (1) of the vehicle and providing a signal indicative thereof,
determining the sex and/or age of said driver (5) and providing a signal indicative thereof, and
controlling, in response to said signals, the power of the engine (15) of the vehicle (2) and/or the safety systems (16) in the vehicle such that said engine power and/or said safety systems are adapted to said driver (5).

2. Method according to claim 1, **characterized by**
sensing at least one physical characteristic and/or the position of one or more passengers (6) or objects (7) in the compartment (1) of the vehicle (2) and providing signals indicative thereof,
determining the sex and/or age of said one or more passengers (6) and/or the type of object (7) and providing signals indicative thereof, and
controlling, in response to said signals, the safety systems (16) in the vehicle (2) such that said safety systems are adapted to said one or more passengers (6) and/or objects (7).

3. Apparatus for improving the operation of a driver-operated motor vehicle for safety purposes and/or of safety systems in the motor vehicle, **characterized in that** said apparatus (10) comprises
a sensor means (11) which is configured for sensing at least one physical characteristic and/or the position of at least the driver (5) of the motor vehicle (2) in a compartment (1) of the vehicle and providing a signal indicative thereof,
a determining means (13) which is configured for determining the sex and/or age of said driver (5) and providing a signal indicative thereof, and
a control means (12) which is operatively coupled to said sensor means (11) and said determining means (13) for controlling, in response to the signals from said sensor means and said determining means, the power of the engine (15) of the vehicle (2) and/or the safety systems (16) in the vehicle such that said engine power and/or said safety systems are adapted to said driver (5).

4. Apparatus according to claim 3, **characterized in that**
the sensor means (11) is configured for sensing at least one physical characteristic and/or the position of one or more passengers (6) or objects (7) in the compartment (1) of the vehicle (2) and providing signals indicative thereof,
the determining means (13) is configured for determining the sex and/or age of said one or more passengers (6) and/or the type of object (7) and providing signals indicative thereof, and
the control means (12) is operatively coupled to said sensor means (11) and said determining means (13) for controlling, in response to the signals from said sensor means and said determining means, the safety systems (16) in the vehicle (2) such that said safety systems are adapted to said one or more passengers (6) and/or objects (7).

5. Apparatus according to claim 3 or 4, **characterized in that** the sensor means (11) comprises an interior alarm for the vehicle.

6. Apparatus according to any one of claims 3-5, **characterized in that** the determining means comprises an image means (13).

7. Apparatus according to claim 6, **characterized in that** the image means (13) comprises a camera.

8. Apparatus according to claim 7, **characterized in that** the image means (13) comprises a camera for monitoring eye movements.

9. Apparatus according to any one of claims 3-8, **characterized in that** the sensor means (11) is configured for sensing and providing a signal indicative of the weight of the driver (5) and/or of said one or more passengers (6) and/or objects (7).

10. Apparatus according to any one of claims 3-9, **characterized in that** the sensor means (11) is configured for sensing and providing a signal indicative of the height of the driver (5) and/or of said one or more passengers (6) and/or objects (7).

11. Apparatus according to any one of claims 3-10, **characterized in that** the sensor means (11) is configured for sensing and providing a signal indicative of the girth of the driver (5) and/or of said one or more passengers (6) and/or objects (7).

12. Apparatus according to any one of claims 3-11, **characterized in that** said apparatus (10) further comprises
a memory means (19) which is configured for storing information therein relating to said at least one physical characteristic and/or the position and/or the sex and/or age of presumptive drivers (5) and passengers (6) and which is operatively coupled to said sensor means (11) and said determining means (13) for comparing the stored information with the signals provided by said first sensor means and said determining means and providing, in response to said comparison, a signal to said control means (12) for controlling the power of the engine (15) of the vehicle (2) and/or the safety systems (16) in the vehicle.

13. Apparatus according to claim 12, **characterized in that** the memory means (19) is configured to store said information by storing the signals provided by said sensor means (11) and said determining means (13).
